**Europäisches Patentamt**

**European Patent Office**

**Office européen des brevets**

(19)

(11) Numéro de publication : **0 477 078 A1**

(12)

# DEMANDE DE BREVET EUROPEEN

(21) Numéro de dépôt : **91402452.6**

(51) Int. Cl.⁵ : **G05B 19/42, B25J 9/18**

(22) Date de dépôt : **16.09.91**

(30) Priorité : **18.09.90 FR 9011500**

(43) Date de publication de la demande :
**25.03.92 Bulletin 92/13**

(84) Etats contractants désignés :
**DE ES GB IT NL**

(71) Demandeur : **AEROSPATIALE Société Nationale Industrielle**
**37, Boulevard de Montmorency**
**F-75781 Paris Cédex 16 (FR)**

(72) Inventeur : **Merigeaux, Olivier, C/o Aérospatiale S.N.I.**
**Monsieur A. Pichon, 316 Route de Bayonne, B.P.3153**
**F-31060 Toulouse Cédex 03 (FR)**
Inventeur : **Larroux, Jean François**
**Route de Daux**
**F-31330 Merville (FR)**

(74) Mandataire : **Mongrédien, André et al**
**c/o SOCIETE DE PROTECTION DES INVENTIONS 25, rue de Ponthieu**
**F-75008 Paris (FR)**

(54) **Procédé et dispositif de guidage de moyens de préhension d'un robot.**

(57)    L'invention concerne un procédé et un dispositif de guidage de moyens de préhension d'un robot.
    Les moyens de préhension (4) sont situés à l'extrémité d'un bras articulé (5) sur un corps (6) du robot (1) et sont actionnés par des moyens (11, 13, 15, 17, 18) de commande de mouvements reliés à un calculateur lui-même relié à une mémoire. Le dispositif comporte une mémoire (24) d'enregistrement de coordonnées approximatives de chaque objet à manipuler, mesurées dans un repère fixe de référence (OXYZ) lié au robot. Un appareillage mobile de stéréovision (25, 26, 27) fournit des signaux analogiques correspondant aux images de l'objet à manipuler. Un calculateur (31) est relié à la mémoire (24) et à l'appareillage de stéréovision pour numériser les signaux analogiques et pour calculer par triangulation, des valeurs de correction des coordonnées approximatives, et pour enregistrer dans la mémoire (24) les coordonnées réelles de l'objet. L'objet étant ainsi repéré par ses coordonnées réelles, le calculateur commande alors les mouvements du bras (5) et des moyens de préhension (4), pour saisir l'objet et le manipuler, selon un programme enregistré.
    Application à la robotique et à l'intelligence artificielle.

EP 0 477 078 A1

FIG. 3

La présente invention concerne un procédé et un dispositif de guidage de moyens de préhension d'un robot.

Elle s'applique à la manipulation automatique d'objets, sans intervention d'un opérateur humain, ces objets étant repérés par des coordonnées approximatives dans un repère fixe de référence.

Le robot de l'invention est du type "à vision" et peut être considéré comme appartenant au domaine de l'intelligence artificielle. Il peut intervenir notamment pour provoquer des mouvements de rotation ou de translation d'objets occupant dans l'espace des positions ayant des coordonnées approximatives connues, dans un repère fixe de référence. Il peut être avantageusement utilisé, par exemple, dans le poste de pilotage d'un avion, pour tester de manière automatique les mouvements des différents boutons et manettes de commande, selon un programme préétabli.

Ces tests sont effectués jusqu'à présent par un opérateur humain, par exemple au cours de la construction ou avant la livraison d'un avion. L'opérateur agit sur les différents boutons et manettes du poste de pilotage, pour provoquer leurs mouvements respectifs, selon une liste préétablie d'actions de tests. Ces actions provoquant les mouvements respectifs des boutons et manettes, permettent de vérifier que les résultats escomptés par suite de ces actions, sont bien obtenus.

Le domaine ou espace de travail de l'opérateur humain peut être qualifié de "sphérique", puisque l'opérateur peut agir selon six axes de différentes directions. L'opérateur consulte la liste d'actions de tests, cette liste comportant la nomenclature des différents boutons et manettes et les actions de mouvements de tests qui leur correspondent respectivement. Pour chaque bouton ou manette, l'opérateur le repère visuellement, le saisit par mouvements du bras et des doigts, puis l'actionne selon le mouvement de test requis.

Il n'existe pas actuellement de système automatique ou de robot doté d'intelligence artificielle et capable d'agir dans un domaine sphérique, à la manière d'un opérateur humain ; aucun dispositif de guidage connu ne permet de repérer visuellement dans un domaine sphérique un bouton ou une manette par vision artificielle ; aucun dispositif connu ne permet non plus de commander dans un robot, les mouvements d'un bras articulé muni de moyens de préhension pour que ceux-ci saisissent le bouton ou la manette, puis actionnent ce bouton ou cette manette selon un mouvement de test requis, après repérage par vision artificielle.

Les seuls robots connus, dotés de vision (caméras vidéo, par exemple de type CCD) ne sont capables de repérer un objet, saisir et actionner des mouvements de cet objet, que dans un plan prédéterminé. Ces robots sont connus dans l'état de la technique, sous le nom de robots "portique".

D'autres types de robots sont connus et sont capables d'agir dans un domaine sphérique. Ces robots ne sont toutefois pas dotés de vision. Les objets à manipuler sont par exemple associés à des moyens de localisation émetteurs d'ondes ; ces ondes sont captées par des moyens de réception du robot pour que l'objet soit repéré par analyse des ondes reçues ; les mouvements du bras et des moyens de préhension du robot sont alors commandés pour que l'objet soit saisi et manipulé selon un programme requis. Ce type de robot nécessite une installation importante, puisque chaque objet doit être associé à un émetteur d'ondes caractéristiques de celui-ci. Il en résulte que pour repérer un grand nombre d'objets, il est nécessaire de mettre en oeuvre des émetteurs fournissant des ondes de caractéristiques différentes ainsi que des moyens d'analyse de ces ondes. Ce type de robot nécessite donc une infrastructure importante qui rend son utilisation inconcevable, par exemple pour tester les boutons et manettes de postes de pilotage de différents avions. Le nombre d'émetteurs à mettre en place est en effet trop important pour que l'utilisation d'un robot de ce type soit rentable.

L'invention a pour but d'éliminer les inconvénients des robots décrits plus haut et notamment de fournir un procédé et un dispositif de guidage des moyens de préhension d'un robot, capable de rendre ce robot utilisable dans un domaine sphérique, ce dispositif de guidage est doté de vision et ne nécessite pas la mise en oeuvre d'émetteurs d'ondes de repérage des objets à manipuler. Le robot mettant en oeuvre le procédé et le dispositif de l'invention est un robot doué d'intelligence artificielle, capable de s'adapter rapidement à tout nouvel environnement d'objets à manipuler. Il est peu encombrant et nécessite, comme on le verra plus loin en détail, une capacité de mémoire raisonnable.

L'invention concerne tout d'abord un procédé de guidage de moyens de préhension d'un robot, ces moyens de préhension étant solidaires d'une extrémité d'au moins un bras articulé sur un corps du robot, ces moyens de préhension et ce bras étant actionnés par des moyens de commande de mouvements pour manipuler des objets situés à des distances compatibles avec un rayon d'action du robot, caractérisé en ce qu'il consiste :

– à définir un repère fixe de référence, lié au robot ;

– à déterminer dans ce repère fixe, des coordonnées approximatives de chaque objet,

– à déterminer des valeurs de correction à apporter aux coordonnées approximatives, pour obtenir des coordonnées réelles de l'objet, ces valeurs de correction étant obtenues par un calcul de triangulation de valeurs numérisées d'images de l'objet obtenues en stéréovision,

– à commander, selon un programme de manipulation préétabli, des mouvements du bras et des moyens de préhension, pour manipuler l'objet localisé par ses coordonnées réelles.

L'invention a aussi pour objet un dispositif de guidage de moyens de préhension d'un robot, ces moyens de préhension étant solidaires d'une extrémité, d'au moins un bras articulé sur un corps du robot, ces moyens de préhension et ce bras étant actionnés par des moyens de commande de mouvements pour manipuler des objets situés à des distances compatibles avec un rayon d'action du robot, caractérisé en ce qu'il comporte :

– une mémoire d'enregistrement de coordonnées approximatives de chaque objet à manipuler, mesurées dans un repère fixe de référence lié au robot ;

– un appareillage mobile de stéréovision solidaire du corps du robot, pour fournir des signaux analogiques correspondant aux images de l'objet à manipuler ;

– un calculateur relié à la mémoire d'enregistrement de coordonnées approximatives et à l'appareillage de stéréovision, pour numériser lesdits signaux analogiques et pour calculer par triangulation de valeurs numérisées des images, des valeurs de corrections à apporter aux coordonnées approximatives et pour fournir des coordonnées réelles de l'objet dans le repère de référence, un programme de calcul, par triangulation étant enregistré dans la mémoire, les moyens de commande étant reliés au calculateur pour commander des mouvements du bras articulé et des moyens de préhension pour assurer la manipulation de l'objet dont les coordonnées réelles sont déterminées, selon un programme de manipulation enregistré dans la mémoire.

Selon une autre caractéristique du dispositif, l'appareillage mobile de stéréovision comporte au moins deux caméras solidaires du corps du robot et munies de moyens de commande d'orientation pour orienter des axes de prises de vues de ces caméras en direction d'un point correspondant aux coordonnées approximatives de l'objet à manipuler, ces caméras fournissant sur des sorties reliées au calculateur lesdits signaux analogiques correspondant aux images de l'objet à manipuler.

Selon une autre caractéristique, chaque objet à manipuler ayant des caractéristiques de forme et de fonctionnement, le procédé consiste à enregistrer dans la mémoire reliée au calculateur, des données numériques de référence correspondant à ces caractéristiques de forme et de fonctionnement, puis à traiter à l'aide du calculateur, les valeurs numérisées de l'image de l'objet pour en extraire des données numériques de repérage correspondant aux caractéristiques de forme et de fonctionnement de l'objet à manipuler, puis à comparer à l'aide du calculateur, les données numériques de repérage avec les données numériques de référence.

D'autres caractéristiques et avantages de l'invention ressortiront mieux de la description qui va suivre, donnée en référence aux dessins annexés dans lesquels :

– la figure 1 est un organigramme des opérations essentielles mises en oeuvre dans le procédé de l'invention,

– la figure 2 représente schématiquement un poste de pilotage d'un avion dans lequel est mis en oeuvre un robot utilisant le procédé et le dispositif de l'invention, pour des tests de mouvements de boutons et manettes.

La figure 3 représente schématiquement et en détail, la structure d'un dispositif de guidage conforme à l'invention.

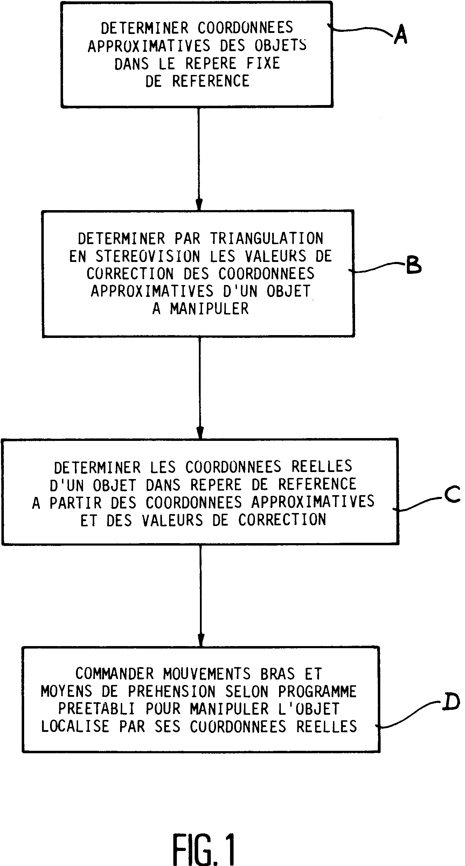

L'organigramme de la figure 1 montre les étapes essentielles mises en oeuvre dans le procédé de l'invention, pour guider des moyens de préhension d'un robot solidaires d'une extrémité d'un bras articulé sur un corps du robot. Comme on le verra plus loin en détail, ces moyens de préhension et ce bras sont actionnés par des moyens de commande de mouvements. Les moyens de préhension et le bras permettent de manipuler des objets situés à des distances compatibles avec un rayon d'action du robot.

Le procédé consiste tout d'abord, au cours d'une première phase opératoire A, à définir un repère fixe de référence, et à déterminer des coordonnées approximatives des objets à manipuler, dans ce repère fixe de référence. S'il s'agit par exemple de manipuler les différents boutons et manettes du poste de pilotage d'un avion, le procédé consiste à définir un repère fixe de référence dans ce poste de pilotage, lié par exemple au siège du pilote, puis à déterminer dans ce repère fixe, les coordonnées des différents boutons et manettes à manipuler. Ces coordonnées sont faciles à mesurer de manière approximative. Le procédé consiste ensuite, au cours d'une phase opératoire B, pour l'objet à manipuler, à déterminer par calcul de triangulation, les valeurs de correction à apporter aux coordonnées approximatives, pour obtenir les coordonnées réelles de l'objet. Le calcul de triangulation est effectué à partir de valeurs numérisées d'images de l'objet, obtenues en stéréovision.

Un exemple de calcul de valeurs de correction est donné dans la revue IEEE TRANSACTIONS ON PATTERN ANALYSIS AND MACHINE INTELLIGENCE- volume 11- N°9 SEPTEMBER 1989, pages 897 à 899.

La phase opératoire C suivante consiste à déterminer les coordonnées réelles de l'objet à manipuler, dans le repère de référence, à partir des valeurs des coordonnées approximatives, et des valeurs de correction, précédemment calculées par triangulation.

Enfin, la phase opératoire D consiste à commander, par des moyens appropriés qui seront décrits plus loin, des mouvements du bras et des moyens de préhension, pour manipuler l'objet localisé par ses coordonnées réelles, selon un programme de manipulation préétabli.

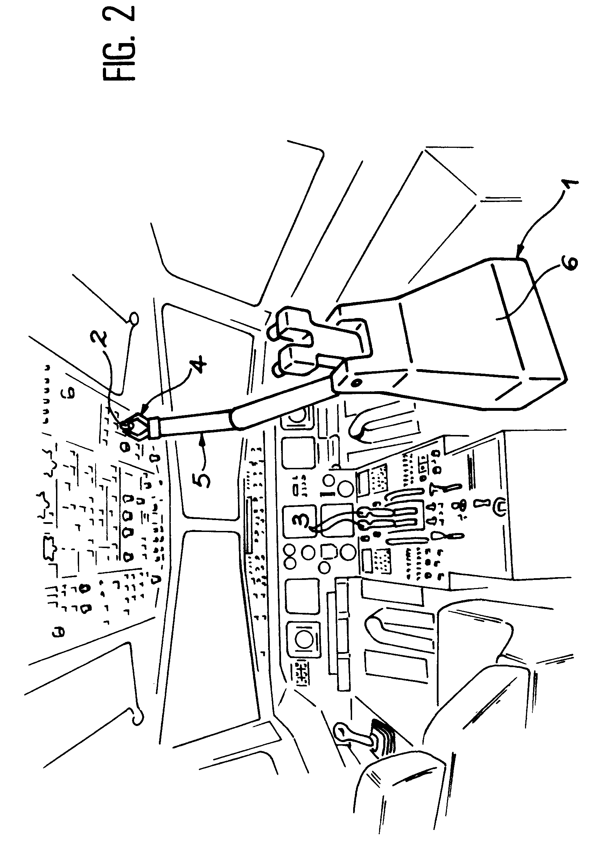

La figure 2 représente schématiquement un poste de pilotage d'un avion dans lequel est mis en oeuvre un robot 1 utilisant le procédé et le dispositif de l'invention, pour des tests de mouvements de boutons et manettes tels que 2, 3.

Le dispositif de l'invention permet de guider des moyens de préhension 4 solidaires d'au moins un bras 5 articulé sur un corps 6 du robot. Ces moyens de préhension et ce bras sont actionnés par des moyens de commande de mouvements, qui seront décrits plus loin en détail, pour manipuler des objets tels que les boutons 2 ou les manettes 3, situés à des distances comptabiles avec un rayon d'action du robot. Dans l'exemple représenté sur la figure, le robot comporte un seul bras muni de moyens de préhension, mais il pourrait comporter au moins un autre bras muni de moyens de préhension. Le robot mettant en oeuvre le dispositif de guidage de l'invention est un robot pouvant intervenir dans six directions différentes, dans un espace sphérique.

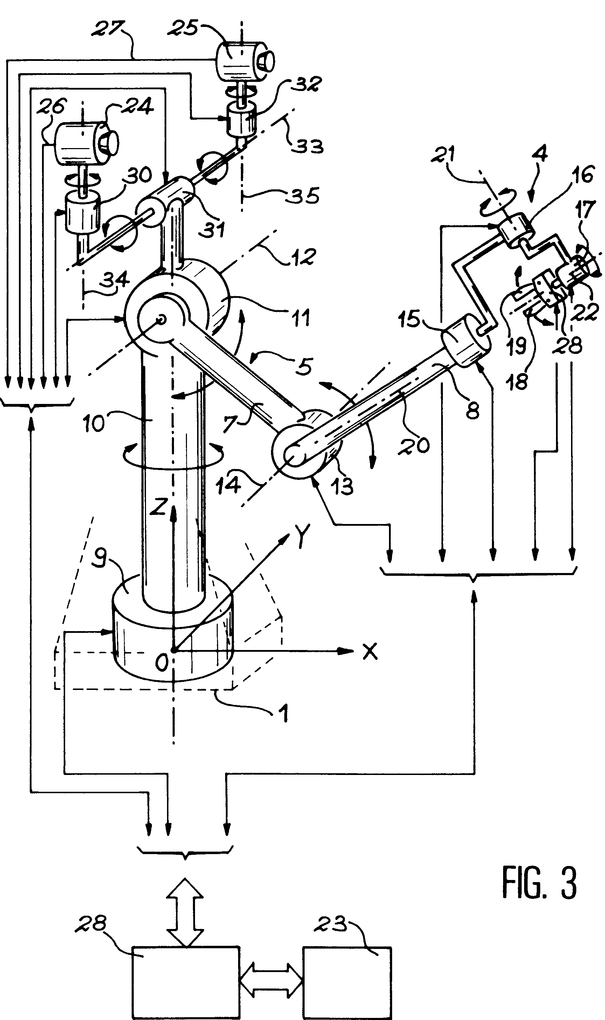

La figure 3 représente schématiquement et de manière plus détaillée, la structure du dispositif de guidage conforme à l'invention. On suppose dans cet exemple, que le robot comporte un seul bras articulé 5 à l'extrémité duquel sont rendus solidaires des moyens de préhension 4. Le bras 5 est d'ailleurs constitué, dans l'exemple représenté, par un bras principal 7 et un avant-bras 8. Le bras 5 est articulé sur le corps 6 du robot.

Les moyens de commande des mouvements du bras 5 et des moyens de préhension 4 comportent, par exemple, un premier moteur 9 capable de faire pivoter le bras 5 autour d'un axe vertical 10 du corps du robot, et un deuxième moteur 11 capable de faire pivoter le bras 5 autour d'un axe horizontal 12, perpendiculaire à l'axe vertical 10. Les moyens de commande comportent aussi un troisième moteur 13 capable de faire pivoter l'avant-bras 8 autour d'un axe 14, perpendiculaire à l'axe vertical 10. Un quatrième, un cinquième et un sixième moteurs 15, 16, 17 sont capables de faire pivoter des pinces 18, 19 des moyens de préhension 4, respectivement autour d'un axe 20 de l'avant-bras 8, d'un axe 21 perpendiculaire à l'axe 20, et d'un axe 22 confondu avec l'axe 20. Des capteurs, non représentés sur la figure, coopèrent avec ces moteurs pour fournir à chaque instant des signaux indiquant les angles respectifs de rotation des éléments coommandés par les moteurs. Un moteur 28 permet également d'écarter ou de rapprocher les pinces 18, 19.

Le dispositif de guidage comporte aussi une mémoire 23 dans laquelle sont enregistrées des valeurs approximatives de coordonnées de chaque objet à manipuler, mesurées dans un repère fixe de référence OXYZ, lié au robot. Dans l'exemple d'application décrit, le dispositif de guidage étant utilisé dans un robot destiné à manipuler les boutons et les manettes du poste de pilotage d'un avion, l'origine 0 de ce repère peut être par exemple le point d'intersection entre un axe vertical du siège du pilote et le plancher de la cabine du poste de pilotage. On peut en effet installer le robot à la place du siège du pilote sur des fixations prévues pour ce siège. Les coordonnées approximatives de différents boutons et manettes du poste de pilotage peuvent parfaitement être mesurées dans ce repère de référence.

Le dispositif de guidage de l'invention comprend aussi un appareillage mobile de stéréovision comportant plusieurs caméras 24, 25 du type CCD par exemple, solidaires du corps du robot et fournissant des images numérisées de l'objet à manipuler. Ces images sont fournies respectivement sous forme de signaux analogiques sur des sorties 26, 27, des caméras.

Un calculateur 28 est relié à la mémoire d'enregistrement 23, à l'appareillage de stéréovision et à des moyens d'actionnement (non représentés), des moteurs mentionnés plus haut ; ce calculateur numérise les signaux analogiques fournis par la caméra et calcule par triangulation, à partir des valeurs numérisées des images, des valeurs de correction à apporter aux coordonnées approximatives ; il fournit aussi les valeurs des coordonnées réelles de l'objet, dans le repère de référence, calculées à partir des coordonnées approximatives et des valeurs de correction. Le calcul de valeur de correction, effectué par triangulation, est connu d'après l'article précité et ne sera pas décrit ici en détail. Les coordonnées réelles de chaque objet, fournies par le calculateur, sont enregistrées dans la mémoire 23. Cette mémoire permet bien entendu d'enregistrer un programme de calcul par triangulation. Elle permet également d'enregistrer un programme de manipulation de chaque objet. Les moyens de commande décrits plus haut (les moteurs 9, 11, 13, 15, 16, 17, 28), ainsi que les capteurs non représentés qui leur sont associés, sont reliés au calculateur pour commander, en fonction des coordonnées réelles de l'objet à manipuler, les mouvements du bras 5 et des moyens de préhension 4 pour assurer la manipulation de cet objet selon le programme de manipulation enregistré pour celui-ci. Le calculateur transmet aux moyens de commande les ordres nécessaires aux mouvements souhaités.

Les caméras 24, 25 de l'appareillage mobile de stéréovision sont solidaires du corps du robot ; ces caméras sont munies de moyens de commande d'orientation. Ces moyens de commande d'orientation sont par exemple des moteurs 30, 31, 32 qui permettent de faire pivoter les caméras, soit autour d'un axe horizontal 33 perpendiculaire à l'axe 12, soit autour d'axes respectifs 34, 35, perpendiculaires à l'axe 33. Les moyens de commande d'orientation des caméras permettent d'orienter les axes de prises de vues de celles-ci, en direction d'un point correspondant aux coordonnées approximatives de l'objet à manipuler. Les moyens de commande 30, 31, 32, ainsi que des capteurs angulaires (non représentés) qui leur sont associés, sont reliés au calculateur 28 pour recevoir des ordres de contrôle d'orientation, en fonction des coordonnées approximatives de l'objet à manipuler, enregistrées dans la mémoire 23. Les caméras 24, 25 fournissent respectivement sur les sorties 26, 27 reliées au calculateur 28, des signaux analogiques représentatifs des images de l'objet. C'est à partir de ces signaux numérisés par le calculateur que sont calculées par triangulation les valeurs de correction à apporter aux coordonnées approximatives de l'objet, enregistrées dans la mémoire 23.

La mémoire 23 reliée au calculateur 28 peut également contenir des données numériques de référence, pour chaque objet à manipuler. Ces données numériques de référence sont relatives à des caractéristiques de l'objet ; elles concernent par exemple la forme de l'objet, une inscription sur celui-ci (un code d'identification par exemple), l'éclairement de cet objet (par exemple si l'objet est un bouton poussoir à lampe incorporée, la lampe doit être allumée ou éteinte selon la position du bouton). Grâce à un programme approprié enregistré dans la mémoire 23, le calculateur 28 traite les valeurs numérisées de l'image de l'objet, fournies par les caméras 24, 25, pour en extraire des données numériques dites de repérage qui correspondent aux caractéristiques de forme et de fonctionnement de l'objet à manipuler. Ces données numériques de repérage sont comparées par le calculateur, avec les données numériques de référence grâce à un programme approprié enregistré dans la mémoire 23. Cette comparaison permet notamment de vérifier que l'objet que le robot s'apprête à manipuler, est bien l'objet souhaité. Elle permet aussi, par exemple, si l'objet est un bouton poussoir, de vérifier que l'état allumé ou éteint de la lampe incorporé correspond bien à l'état souhaité.

## Revendications

1. Procédé de guidage de moyens de préhension (4) d'un robot (1), ces moyens de préhension étant solidaires d'une extrémité d'au moins un bras articulé (5) sur un corps (6) du robot, ces moyens de préhension et ce bras étant actionnés par des moyens de commande de mouvements reliés à un calculateur lui-même relié à une mémoire, pour manipuler des objets (2,4) situés à des distances compatibles avec un rayon d'action du robot, caractérisé en ce qu'il consiste :

   – à définir un repère fixe de référence (OXYZ), lié au robot ;

   – à déterminer dans ce repère fixe, des coordonnées approximatives de chaque objet,

   – à déterminer des valeurs de correction à apporter aux coordonnées approximatives, pour obtenir des coordonnées réelles de l'objet, ces valeurs de correction étant obtenues par un calcul de triangulation de valeurs numérisées de signaux analogiques correspondant aux images de l'objet, obtenues en stéréovision,

   – à commander, selon un programme de manipulation préétabli enregistré dans la mémoire du calculateur, des mouvements du bras (5) et des moyens de préhension (4), pour manipuler l'objet (2 ou 4) localisé par ses coordonnéees réelles.

2. Procédé selon la revendication 1, caractérisé en ce qu'il consiste à enregistrer dans la mémoire du calculateur, des données numériques de référence correspondant à des caractéristiques de forme et de fonctionnement de l'objet à manipuler, puis à traiter, grâce à un programme enregistré dans la mémoire du calculateur lesdites valeurs numérisées des signaux analogiques, pour en extraire des données numériques de repérage correspondant aux caractéristiques de forme et de fonctionnement de l'objet à manipuler, puis à comparer les données numériques de repérage, avec les données numériques de référence.

3. Dispositif de guidage de moyens de préhension (4) d'un robot, ces moyens de préhension étant solidaires d'une extrémité d'au moins un bras articulé (5) sur un corps (1) du robot, ces moyens de préhension et ce bras étant actionné par des moyens de commande de mouvements (9, 11, 13, 15, 16, 17, 28) pour manipuler des objets situés à des distances compatibles avec un rayon d'action du robot, caractérisé en ce qu'il comporte :

   – une mémoire (23) d'enregistrement de coordonnées approximatives de chaque objet à manipuler, mesurées dans un repère fixe de référence lié au robot ;

   – un appareillage mobile de stéréovision (24, 25) solidaire du corps du robot, pour fournir lesdits signaux analogiques correspondant aux images de l'objet à manipuler ;

   – un calculateur (28) relié à la mémoire (23) d'enregistrement des coordonnées approximatives et à l'appareillage de stéréovision, pour numériser lesdits signaux analogiques et pour calculer par triangulation de valeurs numérisées des images, des valeurs de corrections à apporter aux coordonnées approximatives, et pour fournir des coordonnées réelles de l'objet dans le repère de référence (OXYZ), un programme de calcul par triangulation étant enregistré dans la mémoire (23), les moyens de commande étant reliés au calculateur (28) pour commander des mouvements du bras articulé (5) et des moyens de préhension (4), pour assurer la manipulation de l'objet dont les coordonnées réelles sont déterminées, selon un programme de manipulation enregistré dans la mémoire.

4. Dispositif selon la revendication 3, caractérisé en ce que l'appareillage mobile de stéréovision comporte au moins deux caméras (24, 25) solidaires du corps du robot et munies de moyens de commande d'orientation (30, 31, 32,) pour orienter des axes de prises de vues de ces caméras en direction d'un point correspondant aux coordonnées approximatives de l'objet à manipuler, ces caméras (24, 25,) fournissant lesdits signaux analogiques sur des sorties (26, 27) reliées au calculateur.

5. Dispositif selon la revendication 3, caractérisé en ce que les caméras (25, 26) sont munies de zooms automatiques (38, 39) pour accroître les dimensions des images de l'objet et augmenter la précision des valeurs de correction des coordonnées approximatives, après orientation des caméras en direction du point correspondant aux coordonnées approximatives de l'objet.

6. Dispositif selon la revendication 2, caractérisé en ce que la mémoire (24) reliée au calculateur (31), contient des données numériques correspondant à des images de référence d'objets à manipuler, le calculateur comparant les données numériques de référence avec les valeurs numérisées d'images d'objets à manipuler, fournies par l'appareillage de stéréovision (25, 26).

DETERMINER COORDONNEES
APPROXIMATIVES DES OBJETS
DANS LE REPERE FIXE
DE REFERENCE

*A*

DETERMINER PAR TRIANGULATION
EN STEREOVISION LES VALEURS DE
CORRECTION DES COORDONNEES
APPROXIMATIVES D'UN OBJET
A MANIPULER

*B*

DETERMINER LES COORDONNEES REELLES
D'UN OBJET DANS REPERE DE REFERENCE
A PARTIR DES COORDONNEES APPROXIMATIVES
ET DES VALEURS DE CORRECTION

*C*

COMMANDER MOUVEMENTS BRAS ET
MOYENS DE PREHENSION SELON PROGRAMME
PREETABLI POUR MANIPULER L'OBJET
LOCALISE PAR SES COORDONNEES REELLES

*D*

FIG. 1

FIG. 2

FIG. 3

**Office européen des brevets**

# RAPPORT DE RECHERCHE EUROPEENNE

Numero de la demande

EP     91 40 2452

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | EP-A-0 336 174 (CINCINNATI MILACRON INC.) <br> * le document en entier * <br> --- | 1-6 | G05B19/42 <br> B25J9/18 |
| Y | US-A-4 825 394 (BEAMISH ET AL.) <br> * colonne 1, ligne 55 - colonne 2 * <br> --- | 1-6 | |
| A | EP-A-0 361 663 (FORD MOTOR CO. LTD.) <br> * le document en entier * <br> --- | 1-3,6 | |
| A | PATENT ABSTRACTS OF JAPAN <br> vol. 10, no. 143 (P-459)(2200) 27 Mai 1986 <br> & JP-A-60 262 215 ( HITACHI S.K.K. ) 25 Décembre 1985 <br> * abrégé * <br> --- | 1,3 | |
| A | PATENT ABSTRACTS OF JAPAN <br> vol. 9, no. 170 (P-373)(1893) 16 Juillet 1985 <br> & JP-A-60 045 803 ( NISSAN J.K.K. ) 12 Mars 1985 <br> * abrégé * <br><br> ----- | 1,3 | **DOMAINES TECHNIQUES RECHERCHES (Int. Cl.5 )** <br><br> G05B <br> B25J |

Le présent rapport a été établi pour toutes les revendications

| Lieu de la recherche | Date d'achèvement de la recherche | Examinateur |
|---|---|---|
| LA HAYE | 06 DECEMBRE 1991 | HAUSER L.E.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)